# EUROPEAN PATENT APPLICATION

(11) **EP 2 772 458 A1**
(43) Date of publication of application: **03.09.2014**
(21) Application number: 12844464.3
(22) Date of filing: 26.10.2012
(51) Int. Cl.: B65G 65/48, A23P 1/00

(54) **ROTARY PIPE-TYPE LINEAR FEEDER**

(30) Priority: 27.10.2011 JP 2011236539
(71) Applicant: Plus One Techno & Co., Ltd., Fukuoka 807-0813 (JP)
(72) Inventor: NOHMI, Kenji, Kitakyushu-shi Fukuoka 805-0067 (JP)
(74) Representative: Klunker . Schmitt-Nilson . Hirsch
(86) International application number: PCT/JP2012/077774
(87) International publication number: WO 2013/062098

(57) **Abstract**

The purpose of the present invention is to provide a rotary pipe-type linear feeder which enables a stable metered feed by the rotation of a pipe provided with a linear inner cylinder and outer cylinder. In this rotary pipe-type linear feeder (1), a motor-driven pipe (3) is connected to a pipe connection hole (2a), formed at the bottom of a hopper (2) in which a particulate/chopped food ingredient is stored, the food ingredient is fed from the hopper (2) through the interior of the pipe (3) as the pipe (3) rotates, and the food ingredient is supplied to a production line. The pipe (3) is provided with a linear inner cylinder (3a) and a linear outer cylinder (3b) which has a shorter overall length than the inner cylinder (3a) is slidably inserted into the outer cylinder (3b) with a high degree of precision. The outer cylinder (3b) is affixted to a plurality of bearings (7, 7) and brackets (9, 10) supporting the bearings (7, 7), and the brackets (9, 10) and the hopper (2) are integrally mounted on a base plate (11). The bottom surface of the base plate (11) is provided with an angle adjustment means (12) that inclinably supports the base plate (11).

## Description

### FIELD OF THE INVENTION

The present invention relates to a rotary pipe-type linear feeder as a rotary-type food feeder which feeds straight the food ingredient into the rotating pipe which is connected at the bottom of a hopper, for suppling to a production line the food ingredient of particulate/chopped type which is powder soup, dried food, drizzle-type food ( Japanease-Furikake), snack, Japanease-Otyaduke, and so on.

### BACKGROUND OF THE INVENTION

Hereinafter, a background embodiment of the present invention will be concretely described with referent to the drawings.

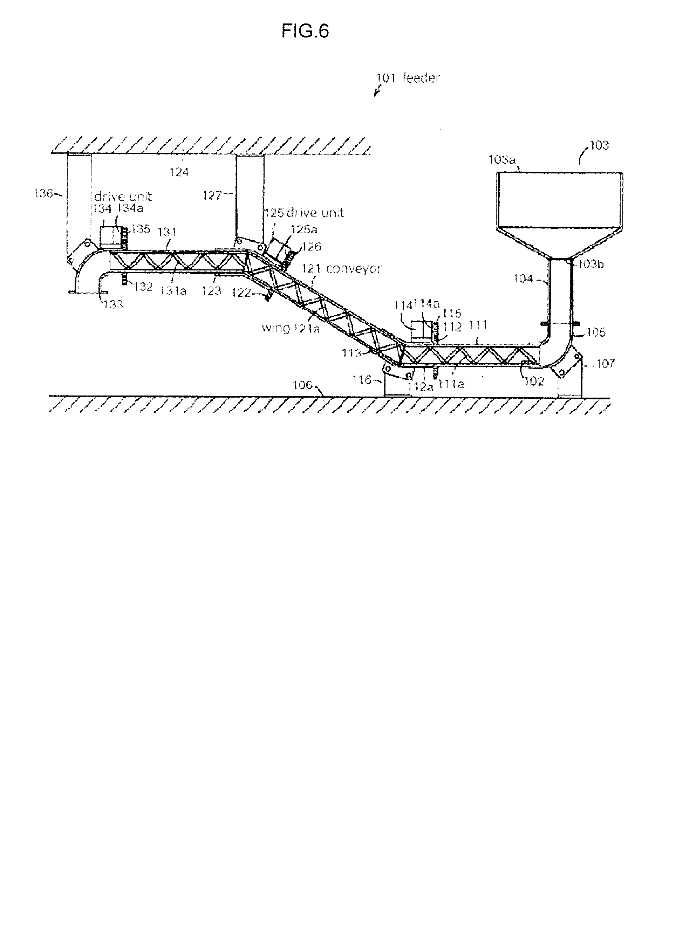

FIG. 6 is the schematic view of the feeder as the conveying device in a conventional art.

As shown in FIG.6, the feeder which hermetically conveys powdered materials, granular materials, and small solid materials comprises, the plurality of carriers which have the inlet in the one end and the outlet in other end for conveying the transported materials, the cylindrical conveyor with the spiral wings having flexibility in the inner periphery, and the drive unit which makes rotary-drive the cylindrical conveyor to the circumferential direction, and conveys the transported materials from the inlet side to the outle side along the spiral wings.

The feeder 101 has the input box 103 such as a hopper as the inlet of the transported materials. This input box 103 is formed in a funnel shape. Hereby the transported materials 102 which are input from the upper opened side 103a is got collected to the bottom opened side 103b. Further, the bottom opened side 103b in the lower side of the input box 103 is communicatively connected toward the vertically downward direction with the connecting pipe 104 as the first connected body.

This connecting pipe 104 is formed in a substantially linear shape. And the inner diameter of the connecting pipe 104 is substantially equal to the diameter of the bottom opened side 103b.

Further, the outlet side in the connecting pipe 104 is communicatively connected with the connecting pipe 105 as the second connected body.

The connecting pipe 105 is bent at a substantial right angle. And in the connecting pipe 105, comprised the inlet side toward the opening direction vertically upward, and the outlet side toward the opening direction to a substantial parallel direction face to face with a floor surface 106.

Further, the connecting pipe 105 has an inner diameter and an outlet diameter substantially equal to the connecting pipe 104.

In addition, on the bottom side of the outer peripheral surface of the connecting pipe 105, the support member 107 is attached. And the connecting pipe 105 is supported on the floor surface 106 by the support member 107.

Furthermore, the conveying pipe 111 as a conveyor is communicatively connected with the outlet side of the connecting pipe 105 substantially parallel and horizontally face to face with the floor surface 106.

For example, the conveying pipe 111 is made of steel, rubber, or vinyl chloride resin, and has the outer diameter substantially equal to the inner diameter of the connecting pipe 105.

Then, the conveying pipe 111 is communicatively connected to the connecting pipe 105 by the outer peripheral surface of the inlet side inserted into the inner peripheral surface of the outlet side of the connecting pipe 105.

In addition, in the conveying pipe 111, the spiral conveying wings 111a having flexibility along the inner periphery surface is formed at substantially equally-spaced intervals along the periphery direction of the carrier pipe 111, example four wings.

For example, the conveying wings 111a are formed by the rubber as an elastic body at convex arcuate in the cross-section. Further, the conveying wings 111a are convexed toward the central axis of the conveying pipe 111.(see Patent Document 1)

[Patent Document 1] Japanese Patent Laid-Open Publication No.2003-165612

The feeder according to the Patent Document 1, comprises the plurality of the cylindrical conveyors with the spiral conveying wings convexed along the inner periphery surface, and the drive unit which makes rotary-drive the cylindrical conveyors to the circumferential direction, and conveys the transported materials from the inlet side to the outle side along the conveying wings.

As above, by conveying the transported materials along the inner side of the conveying pipe, the feeder can hermetically convey without flying apart the transported materials, convexs the spiral conveying wings having flexibility in the inner periphery of the conveying pipe, and makes rotary-drive by the motor the conveying pipe to the circumferential direction, conveys the transported materials along the conveying wings, and can convey the transported materials in a linear shape by the cylindrical conveyor.

However, there are some problems that can not be conveyed the transported materials while maintaining quantitative stability, and the conveying wings are expensive.

Moreover, we had not seen any feeder such as in the present invention so far that is inexpensive, can be set up easily in the production line, and conveys while maintaining ultra quantitative stability with easy operability.

In view of the above problems, it is an object of the present invention to provide a rotary pipe-type linear feeder which enables a ultra stable metered feed by the rotation of a pipe provided with a linear inner cylinder and outer cylinder

### SUMMARY OF THE INVENTION

A rotary pipe-type linear feeder according to a first aspect of the present invention is what has the connection hole formed at the bottom of the hopper which stores the food ingredient for suppling to a production line the food ingredient, connects the pipe of the motor drive to the said connection hole, and conveys the said food ingredient from the said hopper through the interior of the said pipe,
the said rotary pipe-type linear feeder comprises;
the linear inner cylinder having the flange on the end of the said hopper side,
the linear outer cylinder having the shorter length than the said innner cylinder, and being fitted rotatably on the said inner cylinder,
the said pipe which is inclined downward the distal end side for discharging the said food ingredient from the said pipe,
the rotary support means which is provided between the inner periphery of the pipe connection hole and the outer periphery of the said outer cylinder, and is supporting rotatably the said outer cylinder,
the means transmitting the rotational force for transmitting the rotation of the said motor to the said outer cylinder,
and the angle adjustment means which inclinably supports the said pipe.

In addition, the said flange contacts with the end of the said hopper side of the outer cylinder, by fitting rotatably the said inner cylinder for the said outer cylinder, the said flange is in contact with the end of the said outer cylinder, and the said inner cylinder and the said outer cylinder rotate together.

According to a first aspect of the present invention, a rotary pipe-type linear feeder conveys the material through the pipe from the hopper, in the process of transporting the material by the rotation of the pipe which has the linear outer cylinder and the linear inner cylinder rotated according the rotation of the outer cylinder, by friction coefficient with high accuracy in the inner cylinder, rotational speed with high accuracy, and gravitational acceleration, can convey the materials in very homogeneous level, and hereby, is applied to the production line which requires the ultra stable metered feed.

Further, the present invention is characterized in that the said rotational force transmitting means comprises the first gear provided on the rotor shaft of the said motor and the second gear fitted on the outer periphery of the said outer cylinder, engages the second gear with the first gear, and hereby, transmits the rotational driving force of the motor to the outer cylinder.

According to the present invention, by transmitting the rotational driving force of the first gear mounted on the rotor shaft of the motor to the second gear fitted on the outer periphery of the outer cylinder and rotating the outer cylinder, in the process of conveying the materials in rotating at the rotational speed with high accuracy smoothly together with the outer cylinder and the inner cylinder fitted slidably with high accuracy in the outer cylinder, and by friction coefficient with high accuracy in the inner cylinder, rotational speed with high accuracy, and gravitational acceleration, the rotary pipe-type linear feeder can convey the materials in very homogeneous level, and is applied to the production line which requires the ultra stable metered feed.

In addition, the present invention is characterized in that the rotary pipe-type linear feeder has the base plate placed in an integrated manner with the bracket for supporting the said bearing, the bracket for supporting the said motor, and the said hopper.

Hereby, since the main body function units are mounted integrally on the same base plate, it is possible to easily facilitate adjustment and installation of the rotary pipe-type linear feeder in the production line.

The present invention is characterized in that the rotary pipe-type linear feeder comprises the angle adjusting means for supporting the tiltable the said base plate, and inclines the said pipe to the axial direction.

Hereby, by providing the angle adjustment means fixed the base plate that the main body function units are mounted integrally, it is possible to facilitate adjustment and installation in the production line and to easily set the inclination angle slightly.

Further, the present invention is characterized in that the rotary pipe-type linear feeder comprises the flange at one end of the rotation axis direction of the said inner cylinder, the said flange is in contact with the end of the said hopper side on the said outer cylinder, the inner cylinder is fitted rotatably in the said outer cylinder, and the said flange is positioned in contact with the said end of the said outer cylinder.

Hereby, since the flange provided at the one end of the inner cylinder is in contact with the end of the outer cylinder, the inner cylinder inserted into high precision level slidably into the outer cylinder is fitted rotatably together the rotation of the outer cylinder which is connected to a driving force, and is positioned, it is possible to do easily removal and cleaning of the inner cylinder which is the flow path of the materials in end of work or switching the materials.

### BRIEF DESCRIPTION OF DRAWINGS

FIG. 1 is a perspective view showing schematic of a rotary pipe-type linear feeder to explain a first embodiment of the present invention;
FIG. 2 is a schematic view of a rotary pipe-type linear feeder to explain a first embodiment of the present invention, and includes (a) and (b), in which (a) is a elevation cross-section view, (b) is a A-arrow figure shown in (a);
FIG. 3 is a detail view of a rotary pipe-type linear feeder to explain a first embodiment of the present invention, and includes (a) (b) (c) and (d), in which (a) is a perspective view, (b) is a elevation cross-section view showing on the way of inserting the inner cylinder, (c) is a elevation cross-section view showing the shape which is completely inserted the inner cylinder into the outer cylinder; and (d) is a explanatory view showing the relationship between the inner diameter of the inner cylinder and the outer diameter of the outer cylinder;
FIG. 4 is a perspective view showing schematic of a rotary pipe-type linear feeder to explain a second embodiment of the present invention;
FIG. 5 is a schematic view of a rotary pipe-type linear feeder to explain a second embodiment of the present invention, and includes (a) and (b), in which (a) is a elevation cross-section view, (b) is a B-arrow figure shown in (a);
FIG. 6 is a schematic view of a feeder to explain a conventional embodiment;

### DETAILED DESCRIPTION OF EMBODIMENT

Hereinafter, a rotary pipe-type linear feeder according to an embodiment of the present invention will be described in detail with reference to the attached drawings.

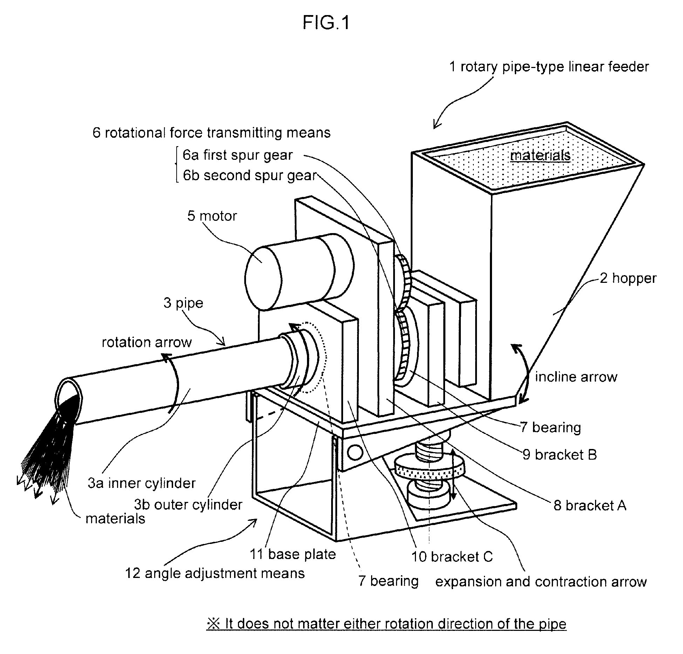

FIG. 1 is a perspective view showing schematic of a rotary pipe-type linear feeder to explain a first embodiment of the present invention.

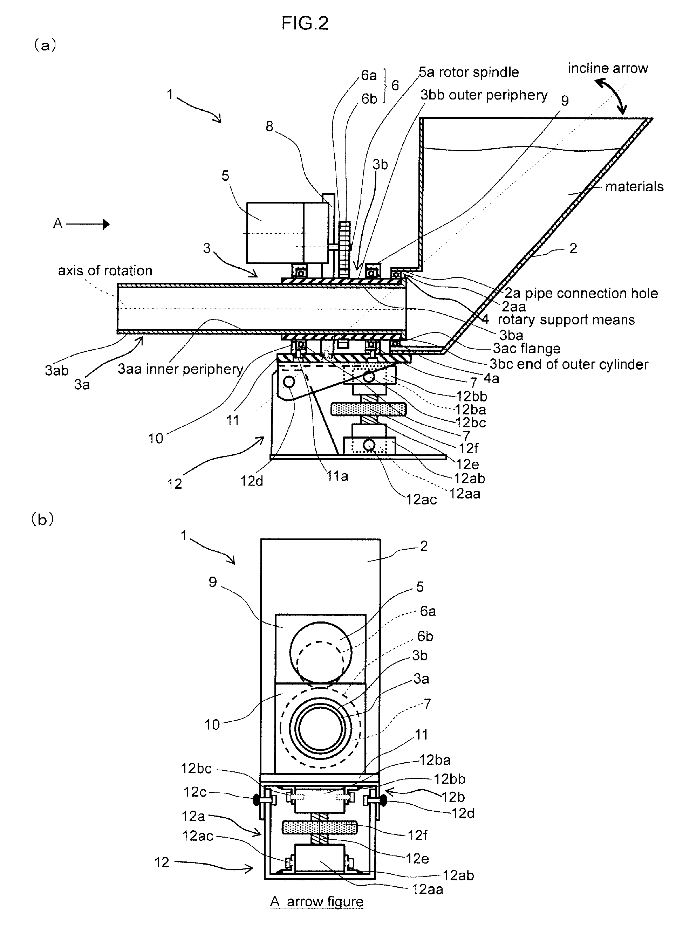

FIG. 2 is a schematic view of a rotary pipe-type linear feeder to explain a first embodiment of the present invention, and includes (a) and (b), in which (a) is a elevation cross-section view, (b) is A-arrow figure shown in (a).

As shown in FIG.1 and (a) (b) of FIG.2, the a rotary pipe-type linear feeder 1 comprises the pipe connection hole 2a formed at the bottom of the hopper 2 in which the food ingredient of particulate/chopped type which is powder soup, dried food, drizzle-type food as Japanease-Furikake, snack, and Japanease-Otyaduke, is stored.

And the motor-driven pipe 3 is connected to the pipe connection hole 2a, the food ingredient is fed from the hopper 2 through the interior of the pipe 3 as the pipe 3 rotates, and the food ingredient is supplied to the production line not shown in the figure.

And the pipe 3 comprises the linear inner cylinder 3a, and the linear outer cylinder 3b having the shorter length than the inner cylinder 3a and being fitted rotatably on the inner cylinder 3a. Hereby, the inner cylinder 3a is slidably inserted into the outer cylinder 3b with a high degree of precision.

The rotary support means 4 for rotatably supporting the outer cylinder 3b is provided between the inner periphery 2aa of the pipe connection hole 2a and the outer periphery 3bb of the outer cylinder 3b. For example, this rotary support means comprises the bearing 4a.

In addition, the rotational force transmitting means 6 for transmitting the rotational force of the motor 5 to the outer cylinder 3b is provided.

The rotational driving force of the motor 5 is transmitted to the outer cylinder 3b through the rotational force transmitting means 6, and the inner cylinder 3a rotates to the same direction together with the rotation of the outer cylinder 3b. And the flange 3ac is provided at the one end of the rotation axis direction of the inner cylinder 3a. And when the inner cylinder 3a is inserted and fitted rotatably into the outer cylinder 3b, the flange 3ac contacts with the end 3bc of the hopper 2 side in the outer cylinder 3b.

The rotational force transmitting means 6 comprises the first gear (first spur gear) 6a provided with being able to transmit the rotational driving force to the rotor shaft 5a of the motor 5, and the second gear (second spur gear) 6b fitted on the outer periphery 3bb of the outer cylinder 3b. And the first gear 6a engages with the second gear 6b. Hereby, the rotational driving force of the motor 5 is transmitted to the outer cylinder 3b.

The motor 5 is fixed to the bracket 8. The outer cylinder 3b is fixted to the plurality of bearings 7, 7 and the brackets 9, 10 supporting the bearings 7, 7. And these brackets 8, 9, 10, and the hopper 2 is integrally mounted on the base plate 11. And the bottom surface of the base plate 11 is provided with the angle adjustment means 12 that inclinably supports the base plate 11.

The angle adjusting means 12 which behaves as a mechanism for tilting the pipe 3 to the axial direction are provided with being vertically movable to the other end as the supporting point on the one end of the substrate 11.

The one end side is the discharge side of the pipe 3, and the other end side is the hopper 2 side which is the inlet side of the pipe 3.

The angle adjustment means 12 comprises the support plate 12b in the upper side, and the support plate 12a in the lower side. And the support plate 12a and the support plate 12b are rotatably supported at the one end side by the support shaft 12c, 12d.

In addition, the support plate 12a and the support plate 12b is vertically connected like being able to open and close as being a fulcrum the support shaft 12c, 12d, by the screw 12e at the other end side.

The screw 12e is screwed the nut 12aa of the support plate 12a side and the nut 12ba of the support plate 12b side.

The nut 12aa and the nut 12ba is supported by the support plate 12ab and the support plate 12bb, and is moved according to the degree of tilt.

And, in near the center of the full-length, since the handle 12f is fixed integrally to the screw 12e, when the handle 12f is turned, the screw 12e also rotates to the same direction.

In addition, since the nut 12ba is a reverse screw, when the screw 12e is rotated to the clockwise direction, the nut 12aa and the nut 12ba move to the closed direction to each other, and when the screw 12e is rotated to the counterclockwise direction, nut 12aa and nut 12ba is moved to an away direction.

In addition, the reverse screw may be provided in either the nut 12aa or the nut 12ba.

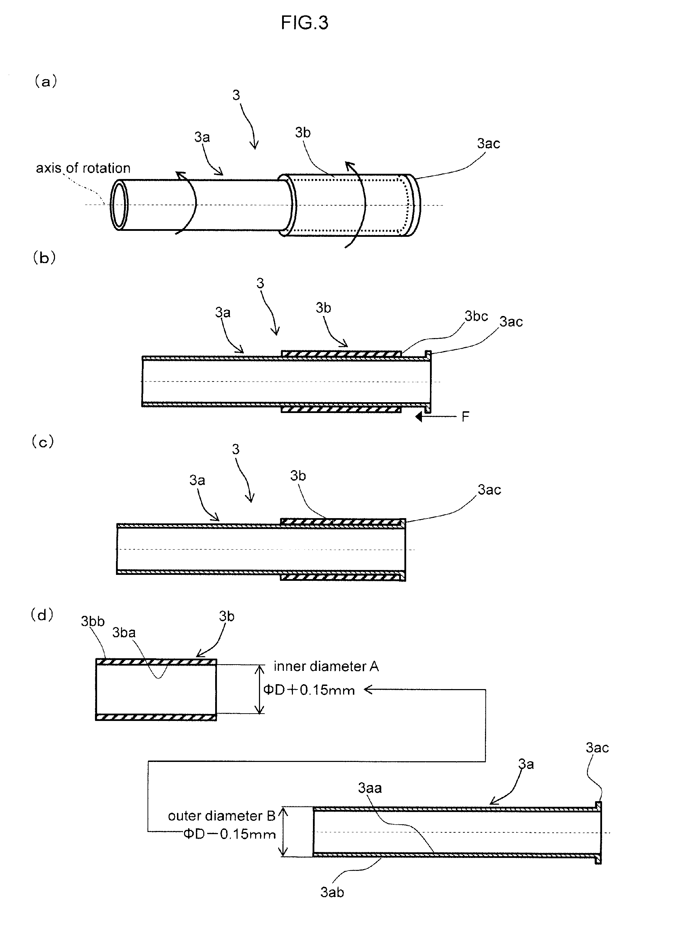

FIG. 3 is a detail view of a rotary pipe-type linear feeder to explain a first embodiment of the present invention, and includes (a) (b) (c) and (d), in which (a) is a perspective view, (b) is a elevation cross-section view showing on the way of inserting the inner cylinder, (c) is a elevation cross-section view showing the shape which is completely inserted the inner cylinder into the outer cylinder; and (d) is a explanatory view showing the relationship between the inner diameter of the inner cylinder and the outer diameter of the outer cylinder.

As shown in (a) of FIG. 3, the pipe 3 comprises the inner cylinder 3a and the outer cylinder 3b.

As shown in (b) (c) of FIG. 3, the Inner cylinder 3a is inserted into the outer cylinder 3b toward the direction of the arrow F, and the flange 3ac is in contact with the end 3bc of the outer cylinder 3b and is positioned.

As shown in (d) of FIG 3, the inner diameter A of the outer cylinder 3b is larger than the outer diameter B of the inner cylinder 3a, for example, the inner diameter A is about ϕD+0.15mm and the outer diameter B is about ϕD-0.15 mm.

It does not matter if the hopper 2 was provided with the stirring mechanism for stirring the hopper 2.

In addition, it does not matter if the clearance between the inner diameter A of the outer cylinder 3b and the outer diameter B of the inner cylinder 3a was provided at about 0.1 ∼ 0.5mm.

Next, the operation of the rotary pipe-type linear feeder according to the first embodiment of the present invention will be described.

As shown in FIG. 1, 2, 3, the food ingredient is stored in the hopper 2. And the pipe connection hole 2a is provided at the bottom of the hopper 2.

The pipe 3 is attached at the pipe connection hole 2a. And the food ingredient in the hopper 2 is conveyed continuously through the interior of the pipe 3 at quantitatively stable. And the materials conveyed are discharged from the pipe 3, and are supplied to the production line etc. And the Pipe 3 is provided with the inner cylinder 3a and the outer cylinder 3b. And the inner cylinder 3a and the outer cylinder 3b is reasonably rotated to the same direction.

Further, since it is possible to easily pull out the inner cylinder 3a from the outer cylinder 3b, the inner periphery 3aa and the outer periphery 3ab of the inner cylinder 3a and the whole can be easily cleaned.

And near both ends of the outer periphery 3bb of the outer cylinder 3b, the bearing 7,7 are respectively provided. And the bearing 7,7 are respectively held by the bracket 9, 10 as without departing.

And the brackets 9, 10 are fixed by the bolts 11 a, 11 a ...on the base plate 11.

In addition, the second spur gear 6b is inserted and fitted on the outer periphery 3bb of the outer cylinder 3b, and the first spur gear 6a and the second spur gear 6b are screwed, the rotational driving force of the motor 5 is transmitted to the outer cylinder 3b, and the second spur gear 6b is rotated in synchronism with a rotation of the motor 5.

And by rotation of the second spur gear 6b, the outer cylinder 3b rotates, and by rotation of the outer cylinder 3b, the inner periphery 3ba of the outer cylinder 3b and the outer periphery 3ab of the inner cylinder 3a is in contact exquisitely, and the inner cylinder 3a is rotated with bringing the outer cylinder 3b.

And by rotation of the inner cylinder 3a, the materials are continuously fed in quantify precisely.

And what is possible to maintain for quantitative transport is a characteristic of the a rotary pipe-type linear feeder of the present invention. And by controlling the rotational speed and the torque of the pipe, adjusting freely of the inclination of the pipe 3, and adjusting finely according to the type of the materials, the appropriate transport accuracy is obtained.

Hereby, in the process of conveying the materials through the pipe from the hopper and conveying the materials by the rotation of the pipe, it is possible to transport the materials leveled very homogeneously by the friction coefficient with high accuracy of the inner cylinder, the rotational speed with high precision, and the gravitational acceleration, and be applied to the production line which requires the ultra stable metered feed.

Further, by providing the angle adjusting means fixed the base plate which the main body function unit is placed integrally, it is possible to facilitate the adjustment and the installation to the production line and set slightly easily the inclination angle.

Further, since the flange provided at the one end of the inner cylinder is in contact with the end of the outer cylinder, the inner cylinder inserted into high precision level slidably into the outer cylinder is fitted rotatably together the rotation of the outer cylinder which is connected to a driving force, and is positioned, it is possible to do easily removal and cleaning of the inner cylinder which is the flow path of the materials in end of work or switching the materials.

Next, the rotary pipe-type linear feeder according to the second embodiment of the present invention will be described in detail with reference to the attached drawings.

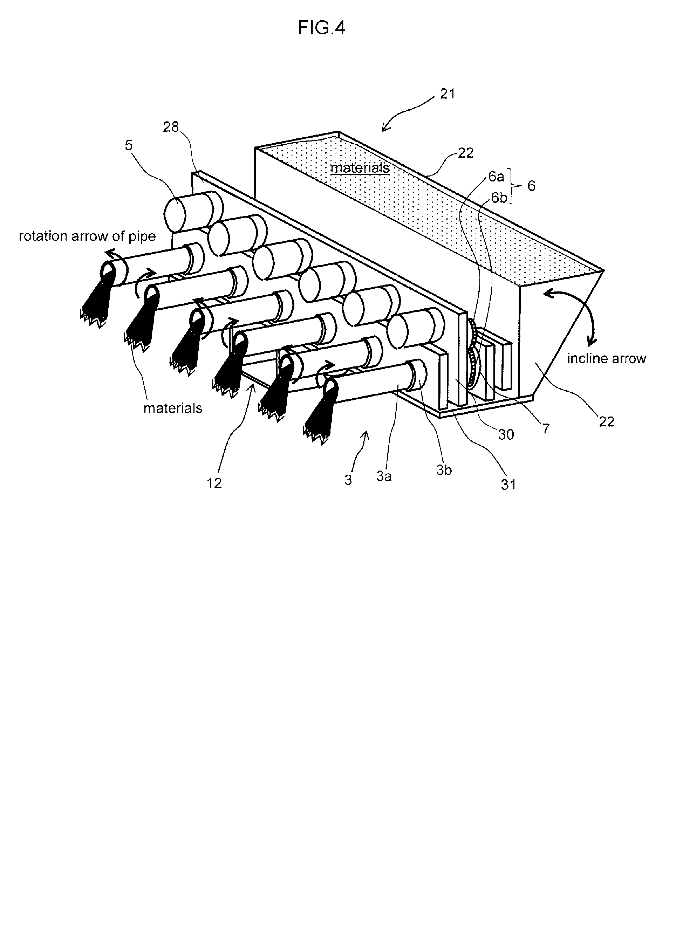

FIG. 4 is a perspective view showing schematic of a rotary pipe-type linear feeder to explain the second embodiment of the present invention.

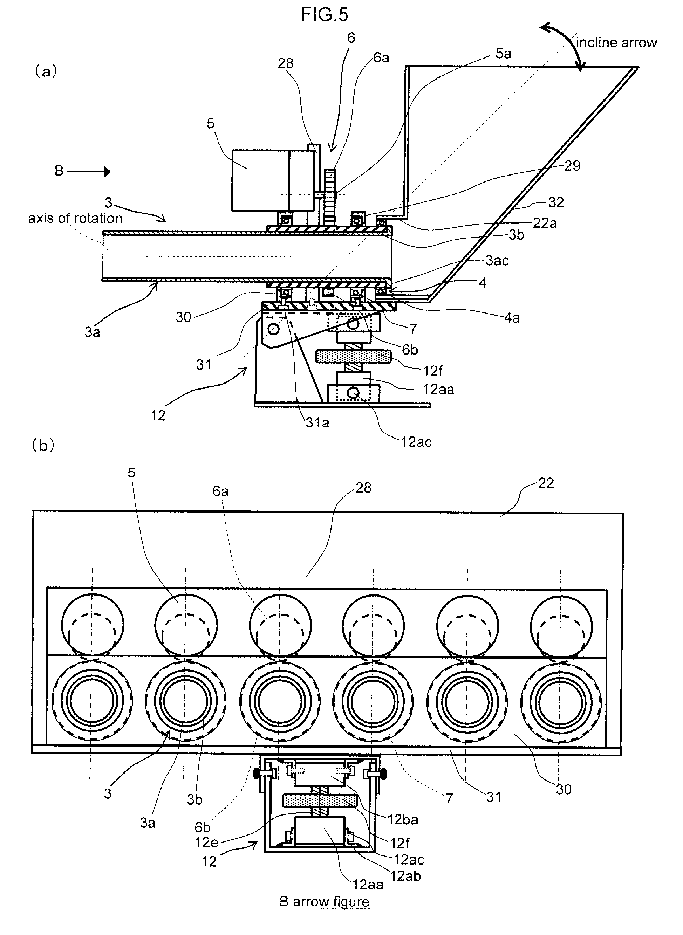

FIG. 5 is a schematic view of a rotary pipe-type linear feeder to explain the second embodiment of the present invention, and includes (a) and (b), in which (a) is a elevation cross-section view, (b) is a B-arrow figure shown in (a).

What the second embodiment differs from the first embodiment is the point which the rotary pipe-type linear feeder 1 in the first embodiment is constituted by the single pipe, and the rotary pipe-type linear feeder in the second embodiment constituted by the six pipes and the six rows in parallel.

In addition, it may be composed of the production line in the small rows or in the multi-rows.

As shown in FIG. 4 and (a) (b) of FIG. 5, the pipe connection hole 22a is provided in the six parallel at the bottom of the hopper 22, and the pipe 3 is provided the six each pipe connection holes 22a, 22a, 22a, 22a, 22a, 22a.

And the brackets 28, 29, 30 equipped with the pipe 3, and the hopper 22 are mounted integrally in the base plate 31.

And the angle adjusting means 12 is provided at the bottom surface of the base plate 31, and supports in tiltable the base plate 31.

Since the other structure is the same as the first embodiment, the detailed description will be omitted.

Although the preferable embodiments are described above, the present invention is not limited to be above embodiments but various changes can make without departing from the spirit of the invention.

For example, It may be provided at six side-by-side the rotary pipe-type linear feeder 1 according to the first embodiment.

Further, the rotational direction of the pipe is rotated to different directions alternately the six pipes in parallel, but it may be changed appropriately.

As the availability in the industry, the present invention is applied to a rotary pipe-type linear feeder which conveys and supplies to a production line the food ingredient of particulate/chopped type which is powder soup, dried food, drizzle-type food as Japanease-Furikake, snack, Japanease-Otyaduke, and so on.
- 1, 21: rotary pipe-type linear feeder
- 2, 22: hopper
- 3: pipe
- 3a: inner cylinder
- 3aa: inner periphery
- 3ac: flange
- 3b: outer cylinder
- 3ba: inner periphery
- 3bb: outer periphery
- 3bc: end of outer cylinder
- 4: rotation supporting means
- 4a: bearing
- 5: motor
- 5a: rotor shaft
- 6: rotational force transmitting means
- 6a: first spur gear
- 6b: second spur gear
- 7: bearing
- 8, 28: bracket
- 9, 29: bracket
- 10, 30: bracket
- 11,31: base plate
- 11a, 31a: bolt
- 12: angle adjustment means
- 12a, 12b: support plate
- 12aa, 12ba: nut
- 12ab, 12bb: support plate
- 12ac, 12bc: bolt
- 12c, 12d: support shaft
- 12e: screw
- 12f: handle

## Claims

1. A rotary pipe-type linear feeder is what has the connection hole formed at the bottom of the hopper which stored the food ingredient for suppling to a production line the food ingredient, connects the pipe of the motor drive to the said connection hole, and conveys the said food ingredient from the said hopper through the interior of the said pipe,
the said rotary pipe-type linear feeder comprises;
the linear inner cylinder having the flange on the end of the said hopper side, the linear outer cylinder having the shorter length than the said innner cylinder and being fitted rotatably on the inner cylinder,
the said pipe which is inclined downward the distal end side for discharging the said food ingredient from the said pipe,
the rotary support means which is provided between the inner periphery of the pipe connection hole and the outer periphery of the said outer cylinder, and is supporting rotatably the said outer cylinder,
the means transmitting the rotational force for transmitting the rotation of the said motor to the said outer cylinder,
and the angle adjustment means which inclinably supports the said pipe,
in addition, the said flange contacts with the end of the said hopper side of the outer cylinder, by fitting rotatably the said inner cylinder for the said outer cylinder, the said flange is in contact with the end of the said outer cylinder, and the said inner cylinder and the said outer cylinder rotate together.
